# EUROPÄISCHE PATENTANMELDUNG

(11) **EP 1 371 517 A1**
(43) Veröffentlichungstag der Anmeldung: **17.12.2003**
(21) Anmeldenummer: 03009458.5
(22) Anmeldetag: 25.04.2003
(51) Int. Cl.: B60L 5/39, B60M 1/04

(54) **Vorrichtung zur Abdeckung eines Schleifschuhs**

(30) Priorität: 10.06.2002 DE 10225805
(71) Anmelder: Stemmann-Technik GmbH, 48465 Schüttorf (DE)
(72) Erfinder: Wilmes, Thomas, Dipl.-Ing., 49090 Osnabrück (DE)
(74) Vertreter: Bockermann, Rolf, Dipl.-Ing.

(57) **Zusammenfassung**

Die Vorrichtung zur Abdeckung eines Schleifschuhs (13) eines Dritte-Schiene-Stromabnehmers (11) ist durch einen in der Vertikalen schwenkbaren Schutzschirm (15) aus einem elektrischen Strom nicht leitenden Material gebildet und in der Betriebslage horizontal oberhalb des Schleifschuhs (13) ausgerichtet. Er deckt den Spalt (14) zwischen der Plattform (1) eines Haltepunkts (2) und einem Wagenkasten (4) eines Fahrzeugs (3) in Richtung zum Strom führenden Schleifschuh (13) ab. Ein Kontakt des Schleifschuhs (13) von der Plattform (1) aus mit Hilfe Strom leitender Gegenstände ist somit nicht möglich.

## Beschreibung

Die Erfindung betrifft eine Vorrichtung zur Abdeckung eines einem schienengebundenen Fahrzeug zugeordneten Schleifschuhs eines Dritte-Schiene-Stromabnehmers.

Ein elektrisch angetriebenes schienengebundenes Fahrzeug (U- oder S-Bahn), bei welchem die elektrische Stromversorgung durch eine oberflächennahe Stromschiene (Dritte-Schiene) erfolgt, die parallel zu dem Fahrweg verlegt wird, besitzt zu diesem Zweck mehrere auf beiden Seiten des Fahrzeugs angeordnete Stromabnehmer. Mehrere in Längsrichtung und auf beiden Seiten des Fahrzeugs zueinander verteilt angeordnete Stromabnehmer sind deshalb erforderlich, um auch in Weichenbereichen und bei Abzweigungen eine konstante Stromversorgung zu gewährleisten. Die Arbeitsweise der Stromabnehmer ist der jeweiligen Konfiguration der Stromschienenanlage angepasst.

Jeder Stromabnehmer besitzt einen Schleifschuh, der von unten, von oben oder von der Seite an die Stromschiene angedrückt werden kann. Zur Kontaktabnahme ist der Schleifschuh aus Metall oder Grafitmaterial gestaltet. Die üblichen Betriebsspannungen liegen bei ca. 700 V bis 1000 V. Soweit im Verlauf einer Stromschiene möglich, wird diese gegen einen direkten Kontakt mit einer gegenüber der Umgebung abschirmenden Abdeckung versehen.

Die Anordnung der Stromabnehmer auf beiden Seiten eines Fahrzeugs stellt auch bei Stromschienenlücken sicher, dass das Fahrzeug stets mit elektrischem Strom beaufschlagt werden kann. Zu diesem Zweck sind sämtliche Stromabnehmer eines Fahrzeugs über eine Ringleitung elektrisch miteinander verbunden.

Obwohl an Haltepunkten eines elektrisch betriebenen Fahrzeugs die Stromschiene grundsätzlich auf der der Plattform eines Haltepunkts abgewandten Seite des Fahrwegs verläuft, steht aufgrund der Ringleitung dennoch jeder Stromabnehmer unter Strom. Dadurch besteht die Möglichkeit, dass Fahrgäste mit gleich welchen Strom leitenden Gegenständen auch immer (Gehhilfen, längliche Transportgegenstände, längliches Kinderspielzeug) durch den Spalt zwischen dem Wagenkasten eines Fahrzeugs und der Plattform des Haltepunkts mit dem Strom führenden Stromabnehmer in Kontakt gelangen können. Folglich kann es zu schweren Verletzungen, insbesondere Verbrennungen, eventuell sogar mit Todesfolge kommen.

Der Erfindung liegt - ausgehend vom Stand der Technik - die Aufgabe zugrunde, Maßnahmen zu treffen, welche verhindern, dass auf der Plattform eines Haltepunkts befindliche Personen gewollt oder ungewollt in einen elektrischen Kontakt mit einem Stromabnehmer kommen können.

Diese Aufgabe wird mit den im Patentanspruch 1 angegebenen Merkmalen gelöst.

Die Erfindung sieht einen Schutzschirm aus einem elektrischen Strom nicht leitenden Material vor, der sich in seiner Betriebslage horizontal oberhalb des Schleifschuhs befindet und welcher in der Vertikalen schwenkbar ist. Die horizontale Lage oberhalb des Schleifschuhs erlaubt es, die Erfindung bei Stromabnehmern anzuwenden, deren Schleifschuhe von unten, von oben oder von der Seite gegen eine Stromschiene gedrückt werden. Die Schwenkbarkeit in der Vertikalen sichert die Zugänglichkeit bei Wartungs- und Austauschmaßnahmen der Stromabnehmer. Sie kann so gewährleistet sein, dass der Schutzschirm grundsätzlich in die horizontale Betriebslage ausgerichtet belastet ist. Der Schutzschirm kann sehr flach, das heißt dünn gebaut werden, so dass er auch gegen Fahrtwind nicht empfindlich ist. Selbst eine nachträgliche Zuordnung zu bestehenden Stromabnehmern ist problemlos möglich.

Dadurch, dass der Schutzschirm den gesamten Bereich des Schleifschuhs mit ausreichendem seitlichen Übermaß abdeckt, können sowohl ungewollte als auch gewollte Kontakte von der Plattform eines Haltepunkts aus mit einem Schleifschuh nicht mehr hergestellt werden. Die horizontale Erstreckung des Schutzschirms ist dabei zweckmäßig so bemessen, dass gleich welche Schrägstellungen eines Strom leitenden Gegenstands durch den Spalt zwischen einem Wagenkasten eines Fahrzeugs und einer Plattform keinen Kontakt mit dem Schleifschuh zulassen. Die Fahrgäste sind demzufolge gegen Stromschlag gesichert.

Entsprechend den Merkmalen des Patentanspruchs 2 besteht der Schutzschirm bevorzugt aus einem rechteckigen Rahmen aus einem Leichtbauwerkstoff mit daran befestigten Schwenkschenkeln und einer Bespannung aus einem reißfesten sowie isolierenden Gewebematerial. Der rechteckige Rahmen kann beispielsweise aus Aluminium oder einer Aluminiumlegierung bestehen. Auch andere elektrische nicht leitende Leichtbauwerkstoffe sind denkbar. Der Rahmen wird mit einem extrem festen, Strom nicht leitenden Gewebematerial, wie Glas- oder Kohlefasergewebe in Form von z.B. Kevlar, bespannt. Eine derartige Bespannung kann auch mit größerer Gewalt nicht durchstoßen werden.

Nach Patentanspruch 3 kann insbesondere die Anlenkung der Schwenkschenkel zusätzlich durch Federn unterstützt sein, die stets bestrebt sind, den Schutzschirm in der horizontalen Betriebslage zu halten. Sie wirken damit auch eventuellen Auftriebskräften durch Fahrtwind intensiv entgegen.

Gemäß den Merkmalen des Patentanspruchs 4 ist es möglich, dass der Schutzschirm an den Rahmen eines Fahrzeugs angelenkt ist. Dies kann z.B. ein Drehgestellrahmen oder ein Wagenkasten sein.

Vorstellbar ist aber auch, dass gemäß Patentanspruch 5 der Schutzschirm an die am Fahrzeug, insbesondere verstellbar, festgelegte Halterung des Dritte-Schiene-Stromabnehmers angelenkt ist.

Wie jeweils die Anlenkung erfolgt, hängt von der Konstruktion des Stromabnehmers und die Art und Weise ab, wie ein Schleifschuh an eine Stromschiene gedrückt ist, d.h., wie die Anbauart des Stromabnehmers gestaltet ist.

Die Erfindung ist nachfolgend anhand von in den Zeichnungen dargestellten Ausführungsbeispielen näher erläutert. Es zeigen:
- Figur 1: im Schema im vertikalen Querschnitt einen Haltepunkt mit Plattform und haltendem Fahrzeug;
- Figur 2: einen horizontalen Querschnitt durch die Darstellung der Figur 1 entlang der Linie ll-ll in Richtung der Pfeile lla gesehen;
- Figur 3: im vertikalen schematischen Querschnitt eine Stromschiene mit von unten angedrücktem Schleifschuh;
- Figur 4: im vertikalen schematischen Querschnitt eine Stromschiene mit von oben angedrücktem Schleifschuh und
- Figur 5: im schematischen vertikalen Querschnitt eine Stromschiene mit seitlich angedrücktem Schleifschuh.

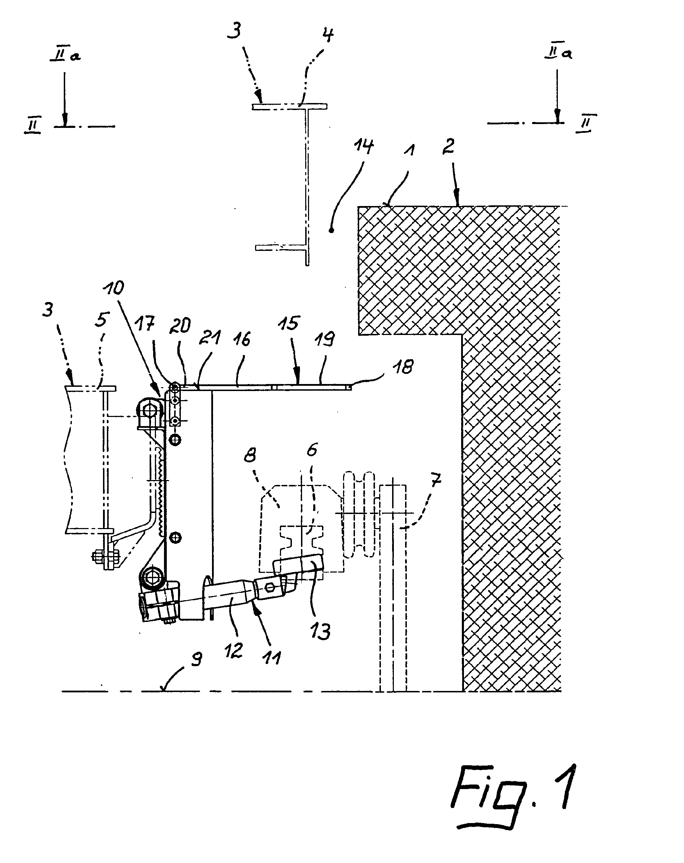

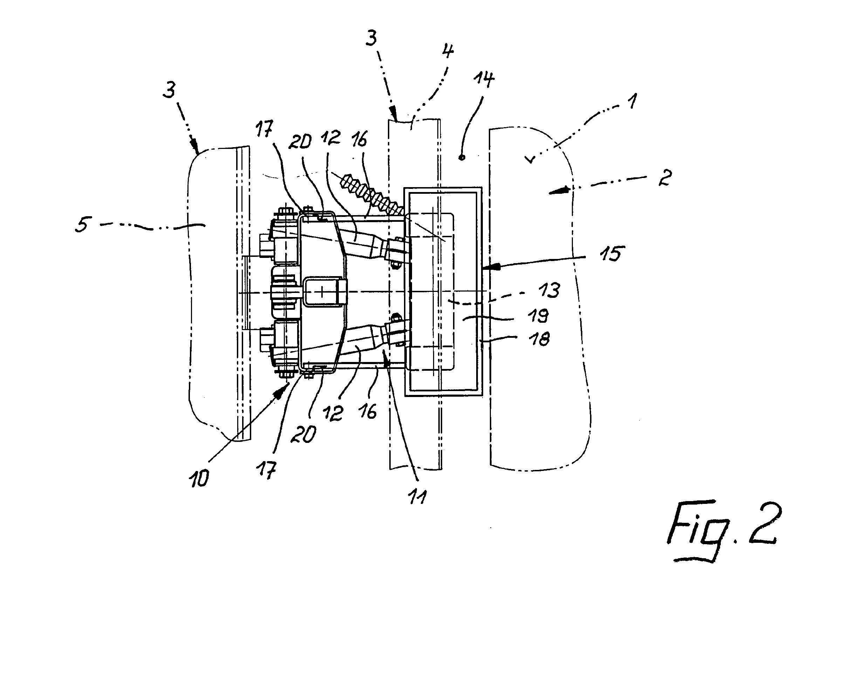

In den Figuren 1 und 2 ist mit 1 die Plattform eines Haltepunkts 2 für ein Fahrzeug 3 im U-Bahn-Betrieb bezeichnet. Der Wagenkasten des Fahrzeugs 3 ist mit 4 und der Drehgestellrahmen mit 5 bezeichnet.

Ferner ist eine Stromschiene 6 mit Halterung 7 und Abdeckung 8 angedeutet. Sie befindet sich in dieser Relativposition zum Fahrzeug 3 nur außerhalb des Haltepunkts 2.

Die Oberkante einer Fahrschiene für das Fahrzeug 3 ist mit 9 bezeichnet.

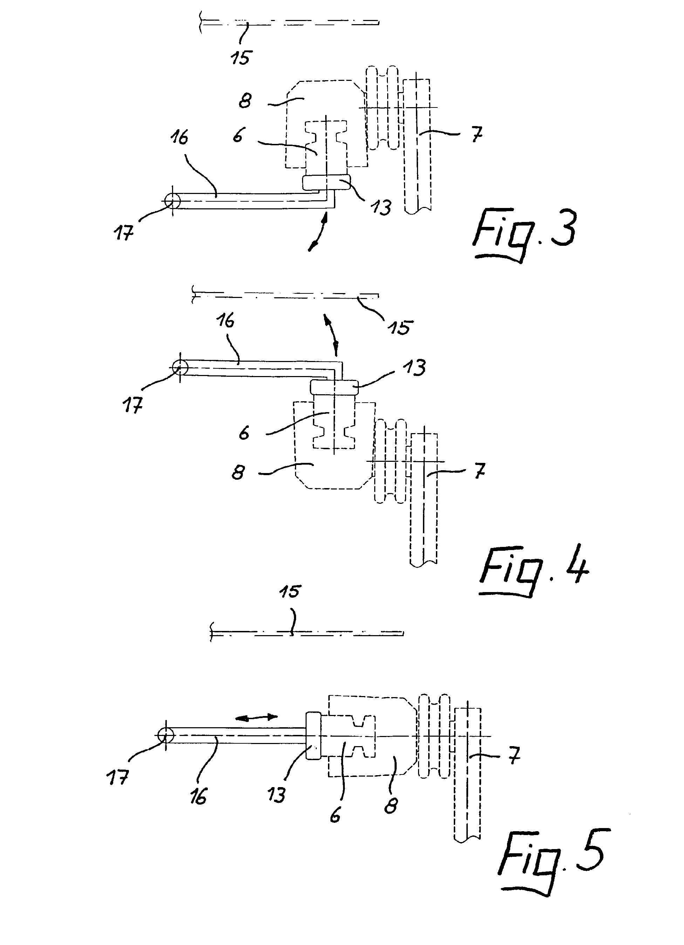

Seitlich an den Drehgestellrahmen 5 ist eine Halterung 10 eines Stromabnehmers 11 befestigt. Der Stromabnehmer 11 verfügt über zwei Isolierarme 12, die an einen Schleifschuh 13 angelenkt sind, der, wie auch die Figur 3 erkennen lässt, außerhalb des Haltepunkts 2 von unten an die Stromschiene 6 andrückbar ist. Im Bereich des Haltepunkts 2 befindet sich eine solche Stromschiene 6 nur auf der der Plattform 1 abgewandten Seite der Fahrschiene 9 für das Fahrzeug 3.

Es ist aus den Figuren 1 und 2 ferner zu erkennen, dass zwischen dem Wagenkasten 4 und der Plattform 1 ein Spalt 14 besteht, durch welchen der Strom führende Schleifschuh 13 von der Plattform 1 aus mit länglichen Gegenständen erreichbar wäre. Solche Gegenstände können Strom leitende Gehhilfen, längliche Teile oder auch längliche Kinderspielzeuge sein.

Um einen Kontakt von der Plattform 1 aus zu verhindern, ist oberhalb der Halterung 10 des Stromabnehmers 11 an diese ein Schutzschirm 15 über zwei Schwenkschenkel 16 angelenkt. Die Schwenkachse ist mit 17 bezeichnet.

Der Schutzschirm 15 umfasst einen rechteckigen dünnen Rahmen 18 aus einem Leichtbauwerkstoff, wie z.B. Aluminium. Dieser Rahmen 18 ist mit einer Bespannung 19 aus einem reißfesten und isolierenden Gewebematerial, wie beispielsweise Kohlenfasergewebe, bespannt. Wie in diesem Zusammenhang insbesondere die Figur 2 erkennen lässt, ist die Erstreckung des Schutzschirms 15 in der horizontalen Ebene so groß bemessen, dass ein Kontakt mit länglichen Strom leitenden Gegenständen von der Plattform 1 aus durch den Spalt 14 mit dem Schleifschuh 13 an dem Schutzschirm 15 vorbei nicht möglich ist.

Die Schwenklagerung des Schutzschirms 15 kann so getroffen sein, dass in der Schwenkachse 17 angeordnete Drehfedern 20 den Schutzschirm 15, insbesondere aber die Schwenkschenkel 16, auf die Oberseite 21 der Halterung 10 drücken und damit den Schutzschirm 15 in der Horizontalen halten.

Die Figuren 3 bis 5 lassen erkennen, dass ein Schleifschuh 13, der von unten (Figur 3), von oben (Figur 4) oder von der Seite (Figur 5) an eine Stromschiene 6 angedrückt ist, in derselben vorteilhaften Art und Weise durch einen Schutzschirm 15 abgedeckt werden kann, wie er anhand der Figuren 1 und 2 erläutert ist.

### Bezugszeichenaufstellung

- 1 -: Plattform v. 2
- 2 -: Haltepunkt
- 3 -: Fahrzeug
- 4 -: Wagenkasten v. 3
- 5 -: Drehgestellrahmen
- 6 -: Stromschiene
- 7 -: Halterung f. 6
- 8 -: Abdeckung f. 6
- 9 -: Oberkante Fahrschiene
- 10 -: Halterung v. 11
- 11 -: Stromabnehmer
- 12 -: Isolierarme v. 11
- 13 -: Schleifschuh v. 11
- 14-: Spalt zw. 1 u. 4
- 15 -: Schutzschirm
- 16-: Schwenkschenkel
- 17 -: Schwenkachse v. 16
- 18-: Rahmen
- 19-: Bespannung
- 20 -: Drehfedern
- 21 -: Oberseite v. 10

## Patentansprüche

1. Vorrichtung zur Abdeckung eines Schleifschuhs (13) eines einem schienengebundenen Fahrzeug (3) zugeordneten Dritte-Schiene-Stromabnehmers (11), welche durch einen in der Vertikalen schwenkbaren Schutzschirm (15) aus einem elektrischen Strom nicht leitenden Material gebildet und in der Betriebslage horizontal oberhalb des Schleifschuhs (13) ausgerichtet ist.

2. Vorrichtung nach Patentanspruch 1, bei welcher der Schutzschirm (15) aus einem rechteckigen Rahmen (18) aus einem Leichtbauwerkstoff mit daran befestigten Schwenkschenkeln (16) und einer Bespannung (19) aus einem reißfesten sowie isolierenden Gewebematerial besteht.

3. Vorrichtung nach Patentanspruch 1 oder 2, bei welcher der Schutzschirm (15) durch Federn (20) in der Horizontalen lagefixiert ist.

4. Vorrichtung nach einem der Patentansprüche 1 bis 3, bei welcher der Schutzschirm (15) an den Rahmen (5) des Fahrzeugs (3) angelenkt ist.

5. Vorrichtung nach einem der Patentansprüche 1 bis 3, bei welcher der Schutzschirm (15) an die am Fahrzeug (3) festlegbare Halterung (10) des Dritte-Schiene-Stromabnehmers (11) angelenkt ist.
